# EUROPÄISCHE PATENTSCHRIFT

(11) **EP 3 084 254 B1**
(45) Veröffentlichungstag und Bekanntmachung des Hinweises auf die Patenterteilung: **14.02.2018**
(21) Anmeldenummer: 14809041.8
(22) Anmeldetag: 09.12.2014
(51) Int. Cl.: F16D 55/224, F16D 65/40, F16D 49/16

(54) **ANSCHLAGANORDNUNG UND BREMSEINRICHTUNG MIT EINER SOLCHEN**
STOP ARRANGEMENT AND BRAKING DEVICE HAVING SUCH AN ARRANGEMENT
ENSEMBLE BUTÉE ET DISPOSITIF DE FREINAGE DOTÉ D'UN TEL ENSEMBLE BUTÉE

(30) Priorität: 19.12.2013 DE 102013114525
(43) Veröffentlichungstag der Anmeldung: 26.10.2016
(73) Patentinhaber: Pintsch Bubenzer GmbH, 57548 Kirchen-Wehbach (DE)
(72) Erfinder: AKYOL, Azad, 57537 Wissen (DE); PRAMSTALLER, Christoph, 57584 Scheuerfeld (DE); HAMMELRATH, Johannes, 53225 Bonn (DE)
(74) Vertreter: MFG Patentanwälte Meyer-Wildhagen Meggle-Freund Gerhard PartG mbB
(86) Internationale Anmeldenummer: PCT/EP2014/077021
(87) Internationale Veröffentlichungsnummer: WO 2015/091102

(56) Entgegenhaltungen:
- EP-A2- 2 037 146
- DE-A1- 19 609 764
- DE-U1-202006 007 823

## Beschreibung

### GEBIET DER ERFINDUNG

Die vorliegende Erfindung betrifft eine Anschlagordnung mit einer ersten und zweiten Bremshebelanordnung, die gemeinsam ein Bremshebelpaar einer Bremszangenanordnung bilden, und jeweils an ihrem ersten Ende an einem Träger angelenkt sind und an ihrem zweiten Ende über eine Stellanordnung miteinander gekoppelt sind.

### HINTERGRUND DER ERFINDUNG

Solche Bremsen sind in Industrieanlagen weit verbreitet. Sie sind meist als Scheiben- oder Trommelbremse ausgebildet. Dabei bilden zwei Bremshebelanordnungen eine Bremszange, die mit zwei Bremsbacken (Bremsbelag, Bremsbelagträger) versehen ist, zwischen denen der abzubremsende Bremskörper (meist eine Scheibe oder eine Trommel) verläuft. Zum Bremsen werden die Bremszange und damit auch die Bremsbacken über einen Hebelmechanismus geschlossen, die Bremsbacken üben eine Bremskraft auf den Bremskörper aus, dessen Drehbewegung durch die dabei wirkenden Reibungskräfte gehemmt bzw. gestoppt wird.

Der Grundaufbau solcher Bremsen ist ähnlich. Bei einer aufrechtstehenden Bremse sind die beiden Bremshebel jeweils an ihrem unteren (ersten) Ende an einem Grundrahmen (Träger) schwenkbar in einem Abstand zueinander angelenkt. An ihrem oberen (zweiten) Ende sind sie über einen Stellhebel, einem Kipphebel und eine Stellstange miteinander gekoppelt. Der Stellhebel bewegt sich synchron mit dem Kipphebel und ist an einem Ende mit dem oberen Ende eines Bremshebels gelenkig verbunden und wird an seinem Stellschenkel von einem Bremslüftgerät bzw. von einem Lüftgerät und einer Bremsfeder angelenkt, die an ihrem gegenüberliegenden (unteren) Ende ebenfalls gelenkig am Träger angelenkt sind.

Der mit dem Stellhebel gekoppelte Kipphebel ist mit einem Schenkelende gelenkig mit einem Ende der Stellstange gekoppelt, die mit ihrem anderen Ende am oberen Ende des anderen Bremshebels angelenkt ist. Zum Bremsen wird der Stellhebel über das Bremslüftgerät bzw. über die Bremsfeder nach unten gezogen, die damit einhergehende Kippbewegung des Kipphebels verkürzt an der Stellstange angreifend den Weg zwischen den beiden Enden der Bremshebel und führt dabei die Zangenbewegung aus, welche die Bremshebel bzw. die Bremsbeläge zusammenführen und auf den Bremskörper wirken lassen.

Zum Lüften oder Lösen der Bremse drückt das Lüftgerät bzw. das Bremslüftgerät den Stellhebelschenkel nach oben, dadurch werden die beiden Bremshebel auseinander geschoben und es wird eine öffnende/lüftende Bremshebelzangenbewegung ausgeführt. Die Bremsbeläge lösen sich vom Bremskörper und dieser wird freigegeben.

Während des Betriebs verschleißen die Bremsbeläge und in geringerem Maße die Bremskörper. Dies führt ohne Kompensation zu verlängerten Bremswegen, die die Einfallzeiten und Bremscharakteristika (Bremskraft) verändern können. Um diesen Verschleiß zu kompensieren, ist die Stellstange mit einem Nachstellmechanismus versehen, der über eine Anschlag-Freilauf-Spindelanordnung die Länge der Stellstange entsprechend der Abnutzung verkürzt, sodass die Bremswege etwa konstant bleiben.

Ein weiteres Problem bei diesen Hebelbremsen besteht darin, dass durch die Stellelemente (Bremslüftgerät und Bremsfeder) beim Lüften der Bremse Kippkräfte aufgebracht werden, die dazu führen, dass die beiden Bremshebel in eine Richtung gleichsinnig verschwenken/verkippen können und dabei ein Bremsbelag am Bremskörper anliegt und schleift.

Um dieses Problem zu lösen gibt es (nachstellbare) Anschläge, die zwischen einem Bremshebel und dem Grundrahmen wirken und dieses Verkippen verhindern sollen - also die gelösten Bremshebel zum Bremskörper zentrieren. Es gibt Anschläge, die von Zeit zu Zeit dem Verschleiß entsprechend von Hand nachgestellt werden oder aber auch solche, die einen Nachstellmechanismus aufweisen, der sich selbsttätig nachführend einstellt - sich also an die durch den Verschleiß bedingte Veränderung der Bremshebelstellung anpasst. Solche Anschlagmechanismen sind beispielsweise aus der DE 196 09 764 A1 bekannt. Sie nutzen z. B. Justierkulissen bzw. einen teleskopierbaren Linearfreilauf, die jeweils zwischen den Bremshebeln und dem Träger (Gestell) wirken. Solche Mechanismen sind konstruktiv vergleichsweise aufwändig und können wartungsintensiv sein.

Bei einer anderen z.B. aus der DE 197 35 127 C1 und der 1 475 307 C bekannten Lösung ist zur Zentrierung eine zwischen den unteren Enden der Bremshebel wirkende Drehkopplung vorgesehen, an der durch die Hebelverhältnisse vergleichsweise hohe Kräfte wirken können.

Die DE 20 2006 007 823 U1 offenbart eine Anschlaganordnung gemäß dem Oberbegriff von Anspruch 1.

Es besteht also die Aufgabe, einen verbesserten und insbesondere auch vereinfachten Zentriermechanismus, bereitzustellen, der das Verkippen des Bremshebelmechanismus verhindert.

### ZUSAMMENFASSUNG DER ERFINDUNG

Diese Aufgabe erfüllt der Gegenstand des Anspruchs 1 der vorliegenden Erfindung.

Die erfindungsgemäße Anschlagordnung umfasst eine erste und zweite Bremshebelanordnung, die gemeinsam ein Bremshebelpaar einer Bremszangenanordnung bilden und jeweils an ihrem ersten Ende an einem Träger angelenkt sind, und an ihrem zweiten Ende über eine Stellanordnung miteinander gekoppelt sind. Dabei ist jeweils zwischen dem ersten und zweiten Ende der ersten Bremshebelanordnung ein erstes Anschlagelement angeordnet und zwischen dem ersten und zweiten Ende der zweiten Bremshebelanordnung ein zweites Anschlagelement. Erstes und zweites Anschlagelement sind derart ausgebildet und greifen so aneinander an, dass sie gegenläufige Betriebsbewegungen zwischen einer Brems- und einer Lüftstellung der Bremshebelanordnungen zueinander und auseinander zulassen, während sie eine gleichgerichtete Kippbewegung der Schwenkhebel in eine Kipprichtung hemmen, sodass das Bremshebelpaar in der Lüftstellung gegen eine Kippwirkung in einem definierten Zentrierstellungsbereich zu einem Bremskörper gehalten wird, ohne dass ein Bremselement den Bremskörper berührt.

Die Erfindung betrifft weiterhin eine Bremseinrichtung mit einer solchen Anschlaganordnung.

Weitere Aspekte und Merkmale der vorliegenden Erfindung ergeben sich aus den abhängigen Ansprüchen, der beigefügten Zeichnung und der nachfolgenden Beschreibung von Ausführungsformen.

### KURZBESCHREIBUNG DER ZEICHNUNG

Ausführungsformen der Erfindung werden nun beispielhaft und unter Bezugnahme auf die beigefügten Figuren beschrieben. Dabei zeigt:
- Fig. 1: eine perspektivische Ansicht von schräg oben einer Bremseinrichtung mit einer erfindungsgemäßen Anschlageinrichtung;
- Fig. 2: eine Vorderansicht der in Fig. 1 dargestellten Bremseinrichtung in gelüfteter Stellung mit unverbrauchten Bremsbelägen;
- Fig. 3: eine Vorderansicht der in Fig. 1 dargestellten Bremseinrichtung in geschlosssener Stellung mit verbrauchten Bremsbelägen;
- Fig. 4: eine perspektivische Ansicht der in Fig. 1 dargestellten Bremseinrichtung mit Lüftgerät und Bremsfederanordnung;
- Fig. 5: eine Vorderansicht der in Fig. 1 dargestellten Bremseinrichtung mit einer alternativen Anschlageinrichtung.

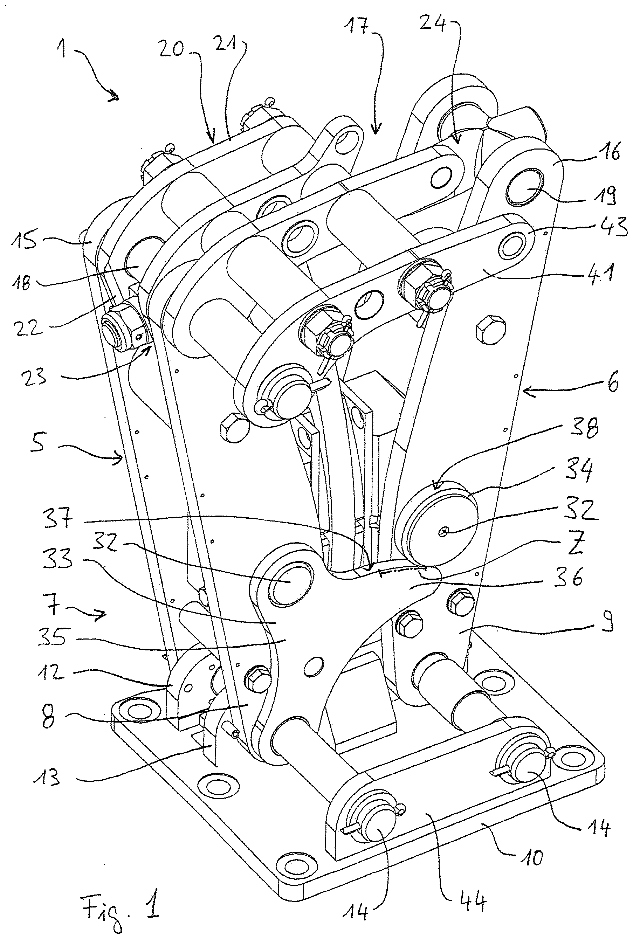

Fig. 1 zeigt ein Ausführungsbeispiel einer erfindungsgemäßen Anschlaganordnung. Vor einer detaillierten Beschreibung folgen zunächst allgemeine Erläuterungen zu den Ausführungsformen.

Die erfindungsgemäße Anschlaganordnung zeichnet sich durch ein erstes und zweites Anschlagelement aus, die jeweils an den ersten und zweiten Bremshebelanordnungen angeordnet sind. Sie sind so ausgebildet und gestaltet, dass sie aneinander angreifen, dabei gegenläufige Betriebsbewegungen zwischen einer Brems- und Lüftstellung der Bremshebelanordnungen zueinander zulassen und eine gleichgerichtete Kippbewegung beider Schwenkhebelanordnungen in eine Richtung hemmen.

Damit ist das Bremshebelpaar in der Lüftstellung gegen eine Kippwirkung in einem definierten Zentrierstellungsbereich zum Bremskörper gesichert. Es tritt kein einseitiger Verschleiß an einem der Bremsbeläge bzw. am Bremskörper auf, der sonst durch Anliegen eines Bremsbelags am Bremskörper auftreten könnte. Ein zusätzlicher Nachstellmechanismus der Anschlagelemente entfällt, da diese unabhängig von der Stellung der Bremshebel zueinander in jeder Betriebstellung die Kippbewegung hemmen.

Gleichgerichtete Kippbewegung bedeutet in diesem Zusammenhang eine Verstellung der gesamten Bremsanordnung und insbesondere der Bremshebelanordnungen, bei der sich diese gleichzeitig bzw. gleichsinnig in eine Richtung bewegen.

Durch die asymmetrische Anlenkung der Bremshebelanordnungen über die Stellanordnung gib es bei im Wesentlichen aufrecht angeordneten Bremshebelanordnungen eine bevorzugte Kipprichtung. Die Anschlagordnung ist so ausgeführt, dass die Bremshebelanordnungen entgegen dieser bevorzugten Kipprichtung festgehalten werden. Die Bremshebelanordnungen werden dabei in einem definierten Zentrierstellungsbereich zum Bremskörper gehalten, der so eingestellt wird, dass in diesem Bereich die Bremselemente den Bremskörper nicht berühren.

Es gibt Ausführungen, bei denen dieser Zentrierstellungsbereich eine erste Grenzstellung und eine zweite verschleißabhängige Grenzstellung umfasst, welche die Bremshebelanordnungen in der Lüftstellung einnehmen. In der ersten Grenzstellung sind die Bremshebelanordnungen weiter geöffnet. Diese erste Grenzstellung betrifft einen Zustand, in dem Bremskörper und Bremselemente weitgehend unverbraucht sind. In einer zweiten Grenzstellung sind die Bremshebelanordnungen weiter geschlossen, und zwar um den Betrag des Verschleißabtrags an den Bremselementen bzw. am Bremskörper. Die Stellungen der Bremshebelanordnungen innerhalb des Zentrierstellungsbereiches werden über eine Verschleißnachstellung eingestellt, die entweder bei Bedarf oder automatisch im Bremsbetrieb die Stellung der Bremshebelanordnungen zueinander verändert.

In einer Ausführung sind das erste und das zweite Anschlagelement jeweils mit einer Steuerkurvenkontur versehen, die in einer Zentrierstellung innerhalb des Zentrierstellungsbereichs aneinander liegen (selbsthemmend aneinander liegen), sodass die an der Bremshebelanordnung ansetzende Kippwirkung die Steuerkurvenkontur des ersten Anschlagelementes so an die des zweiten Anschlagelementes anlegt, dass eine weitere Kippbewegung der so über die Steuerkurvenkonturen der Anschlagelemente gekoppelten Bremshebelanordnungen gehemmt ist.

In einer Ausführung ist dabei das erste Anschlagelement als Steuernocke und das zweite Anschlagelement als Anschlagrolle ausgebildet. Diese Ausführung gestattet eine einfache Steuerkurvenkombination, bei der die eine Steuerkurve an der Anschlagrolle als Radialfläche mit konstantem Radius ausgebildet ist und die andere Steuerkurvenfläche einen daran angepassten Krümmungsverlauf der Steuerkurvenkontur aufweist. Im Bremsbetrieb beim Schließen und Lüften der Bremse bleiben beide Flächen in einem konstanten Abstand zueinander oder gleiten bzw. rollen aneinander ab, während unter Kipplast in eine Richtung die Steuernocke mit ihrer Steuerkurvenkontur die Anschlagrolle unterstellt und sich an dieser abstützt und damit die Kippbewegung hemmt.

In einer Ausführung ist dabei die Steuernocke als Lasche ausgebildet, die zum einen im ersten Anlenkpunkt der Bremshebelanordnung und zum anderen in einem Aufnahmepunkt eines Bremsbelagträgers zwischen dem ersten und zweiten Ende der Bremshebelanordnung fixiert ist. In diesen Punkten stehen zwei sehr stabile und genau positionierbare Zapfen- bzw. Wellenenden zur Verfügung an denen sich die als Steuernocke dienende Lasche genau positionieren und belastungsgerecht fixieren lässt.

In einer anderen Ausführung ist die Anschlagrolle lediglich im Aufnahmepunkt eines Bremsbelagträgers an der Bremshebelanordnung fixiert. Da die Bremsrolle punktsymmetrisch ausgebildet ist, reicht ein einziger Fixierungspunkt, für den sich die Wellenenden, welche die Bremselemente bzw. die Bremsbelagträger in der Bremshebelanordnung aufnehmen, besonders eignen. Da bei den üblichen Konstruktionen in diesem Bereich die Bremshebelanordnungen relativ nah zusammenliegen, lassen sich kompakte und robust gestaltete Anschlagelemente als Nocke und Rolle bzw. als zwei ineinandergreifende Nocken ausbilden.

Bei einer Ausführung sind die Krümmungsverhältnisse zwischen den am ersten Anschlagelement ausgebildeten Krümmungsradien in der Steuerkurvenkontur und die Krümmungsradien entlang dem Krümmungsverlauf der Steuerkurvenkontur des zweiten Anschlagelements in einem Verhältnis zwischen drei zu eins und eins zu eins und insbesondere von zwei zu eins ausgebildet. Damit lassen sich die wirksamen Flächenpressungen im Kontaktbereich der beiden Steuerkurvenkonturen so anpassen, sodass eine Überlastung der Anschlagelemente vermieden wird. Gleichzeitig ist es so auch möglich, dass beispielsweise die eine Steuerkurvenkontur einen festen Radius aufweist während die zweite Steuerkurvenkontur einen Krümmungsverlauf mit sich ändernden Krümmungsradien aufweist, um die Beweglichkeit der Bremshebelanordnung zueinander im Brems- und Lüftbetrieb sicherzustellen.

Es gibt auch Ausführungen, bei denen das Verkippen der Schwenkhebelanordnungen in beide Kipprichtungen gehemmt werden soll. Dies gelingt dadurch, dass an jeder der beiden Bremshebelanordnungen jeweils ein erstes und ein zweites Anschlagelement angeordnet sind - beispielsweise auf den beiden gegenüberliegenden Seiten der Bremshebelanordnungen - die dann kreuzweise ineinander greifen, sodass eine Kippbewegung in beide Richtungen gehemmt ist. Damit wird zum einen die funktionsbedingte Kippwirkung, die über das Lüftgerät bzw. die Bremsfeder aufgebracht wird, unterdrückt und zum anderen eine lagebedingte Kippwirkung, die beispielsweise durch eine waagerechte Anordnung der Bremshebelanordnungen (z.B. bei einer vertikalen Bremsscheibenachse) schwerkraftbedingt auftreten kann. Eine so beidseitig wirkende Anschlaganordnung erlaubt eine beliebige Einbaulage einer solchen Hebelbremse, und stellt auch dabei eine zentrierte, berührungslose Stellung der Bremsbacken zueinander in der Lüftstellung sicher.

Bei einer Ausführung sind die Anschlagelemente aus einem härtbaren Werkstoff hergestellt und/oder weisen einen Steuerkurvenbereich auf, der oberflächenbehandelt ist, um die auftretenden Belastungen (Flächenpressungen) verschleißarm standzuhalten. Damit lassen sich zum einen die Austauschintervalle für die Anschlagelemente verlängern, indem der Verschleiß verringert wird und zum anderen lässt sich so auch die Zentriergenauigkeit erhöhen, da die Konturverläufe der Steuerkurven auch im Dauerbetrieb weitgehend konstant bleiben und verschleißbedingte Ungenauigkeiten reduziert werden.

Eine Bremseinrichtung mit einer solchen erfindungsgemäßen Anschlaganordnung ist ohne komplizierte zusätzliche bewegliche Stellelemente auch in der Lüftstellung selbstzentrierend, und zwar unabhängig von der Stellung der Bremshebelelemente zueinander.

### BESCHREIBUNG VON AUSFÜHRUNGSFORMEN

Aufbau und Funktion der erfindungsgemäßen Anschlaganordnung bzw. einer Bremshebelanordnung mit einer solchen Anschlaganordnung wird nachfolgend anhand der Figuren 1 bis 4 erläutert.

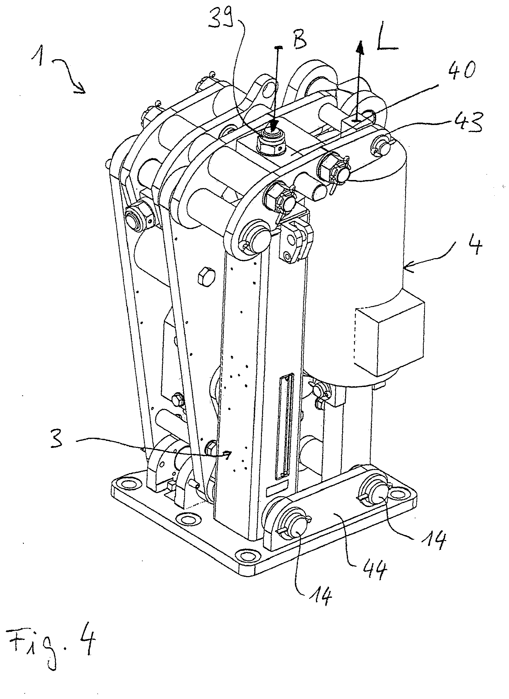

Dabei zeigt Fig. 1 eine Industriebremse 1, bei der zum besseren Verständnis der Anschlaganordnung 2 die Bremsfederanordnung 3 und das Lüftgerät 4 (vgl. Fig. 4) weggelassen sind.

Die Anschlaganordnung 2 umfasst eine erste und zweite Bremshebelanordnung 5, 6, die gemeinsam ein Bremshebelpaar in einer typischen Bremszangenanordnung 7 bilden. Dazu sind die erste und zweite Bremshebelanordnung 5, 6 jeweils an ihren ersten (unteren) Enden 8, 9 an einer einen Träger bildenden Grundplatte 10 über daran angeordnete Sockel 12, 13 angelenkt. Das Gelenk bildet dabei jeweils ein die Bremshebelanordnungen 5, 6 sowie die Sockel 12, 13 durchsetzender Bolzen 14.

An ihren zweiten (oberen) Enden 15, 16 der Bremshebelanordnungen 5, 6 sind diese über eine Stellanordnung 17, die über Gelenkbolzen 18, 19 mit den Bremshebelanordnungen 5, 6 gekoppelt ist, angelenkt. Die Stellanordnung 17 umfasst eine Winkelhebelanordnung 20, die gelenkig auf dem Gelenkbolzen 18 sitzt. Sie umfasst einen quer zu den Bremshebelanordnungen 5, 6 verlaufenden Steuerschenkel 21 und einen davon abstehenden etwa parallel zur Bremshebelanordnung 5 verlaufenden kurzen Stellschenkel 22.

Zwischen einem Anlenkpunkt 23 im Steuerschenkel 21 und dem Gelenkbolzen 19 verläuft eine Stellstange 24, deren Länge entlang ihrer Achse 25 über eine Gewindespindelanordnung 26 verstellbar ist.

Jede Bremshebelanordnung 5, 6 trägt zwischen ihrem ersten (unteren) Ende 8, 9 und ihrem zweiten (oberen) Ende 15, 16 ein Bremselement 27, das aus einem Bremsbelag 28 und einem Bremsbelagträger 29 gebildet wird. Zwischen den einander zugewandten Bremsflächen 30 der Bremsbeläge 28 verläuft ein bei dieser Ausführung als Bremsscheibe 31 ausgebildeter Bremskörper. Die Bremsbelagträger 29 sind über Tragbolzen 32 jeweils gelenkig an der ersten und zweiten Bremshebelanordnung 5, 6 angebracht. Jeder der Tragbolzen 32 ragt mit einem Ende aus der Bremshebelanordnung 5, 6 heraus und durchsetzt ein erstes Anschlagelement 33 und ein zweites Anschlagelement 34.

Das erste Anschlagelement 33 ist als mehrschenkliger Hebel ausgestaltet, der einen Halteschenkel 35 umfasst, der an seinem oberen Ende vom Tragbolzen 32 durchsetzt wird und an seinem unteren Ende vom Bolzen 14 und so drehfest mit der ersten Bremshebelanordnung 5 gekoppelt ist, sodass er jeder Schwenkbewegung der ersten Bremshebelanordnung 5 folgt. Zusätzlich weist er einen Steuerschenkel 36 auf, der etwa quer zum Halteschenkel verläuft und sich von diesem ausgehend bis in den Bereich der zweiten Bremshebelanordnung 6 hinein erstreckt. Der Steuerschenkel 36 weist eine Steuerkurvenkontur 37 auf.

Das zweite Anschlagelement 34 ist bei dieser Ausführung als kreisrunde Scheibe ausgebildet, die **insbesondere auch drehbar** auf dem Tragbolzen 32 sitzt und deren zylindrische Umfangsfläche 38 ebenfalls eine Steuerkurvenkontur bildet, die gegebenenfalls mit der Steuerkurvenkontur 37 im Eingriff steht. Erstes und zweites Anschlagelement 33, 34 sind optioanl aus einem härtbaren Werkstoff hergestellt und weisen ebenfalls optional im Bereich der jeweiligen Steurkurvenkontur 38, 37 eine Beschichtung auf welche die Gleit- bzw. die Verschleißeigenschaften dort verbessert.

Die Bremsfunktion wird anhand der Figuren 1, 2 und 3 beschrieben, die jeweils eine Ansicht der Industriebremse 1 zeigen, bei denen Lüftgerät 4 und Bremsfederanordnung 3 weggelassen ist. Zum Bremsen (Schließen) der Bremse 1 übt die Bremsfederanordnung 3 über ihre Spindel 39 und das Kreuzstück 40 eine Stellkraft B auf den Steuerhebel 41 aus, der über die Querbolzen 42 mit dem Steuerschenkel 21 der Winkelhebelanordnung 20 gekoppelt ist, der dadurch eine Schwenkbewegung um den Gelenkbolzen 18 ausführt, dabei über den Anlenkpunkt 23 an der Stellstange 24 angreift und über diese im Gelenkbolzen 19 an der zweiten Bremshebelanordnung 6 wirkt, sodass sich die beiden Bremshebelanordnungen 5 und 6 in einer Zangenbewegung aufeinander zu bewegen. Dabei werden die Bremselemente 27 zusammengeführt, sodass sie sich an der Bremsscheibe 31 anlegen und dort über die entstehende Reibungskraft eine deren Drehung hemmende Bremswirkung entfalten.

Zum Lüften bzw. Lösen der Bremse übt das Lüftgerät 4 eine Kraft L auf das Ende 43 des Steuerhebels 41 aus und verschwenkt diesen gegen die Stellkraft B in die andere Richtung, sodass über die gekoppelte Winkelhebelanordnung 20 und die Stellstange 24 die Enden 8, 9 der ersten und zweiten Bremshebelanordnung zangenartig auseinandergedrückt werden und dabei die Bremselemente 27 von der Bremsscheibe 31 gelöst werden.

Da sowohl das Lüftgerät 4 als auch die Bremsfederanordnung 3 jeweils nur geeignet sind Axialkräfte zu übertragen, sind diese gelenkig an ihren Enden mit dem Steuerhebel 41 bzw. über die Bolzen 14 mit der Grundplatte 10 über einen Zusatzsockel 44 gekoppelt. Durch die asymmetrische Anlenkung des Steuerhebels 41 über das Lüftgerät 4 am Ende 43 entsteht neben der Spreizkraft, die über die Stellstange 24 übertragen wird, ein Kippmoment M, welches die beiden Bremshebelanordnungen 5 und 6 in die gleiche Richtung versetzen würde. Dabei würde dann eine der Bremsflächen 30 auch bei gelösten (gelüfteten) Bremsbelägen 28 an der Bremsscheibe 31 anliegen und bei sich drehender Bremsscheibe 31 verschleißen bzw. die Bremsscheibe 31 verschleißen.

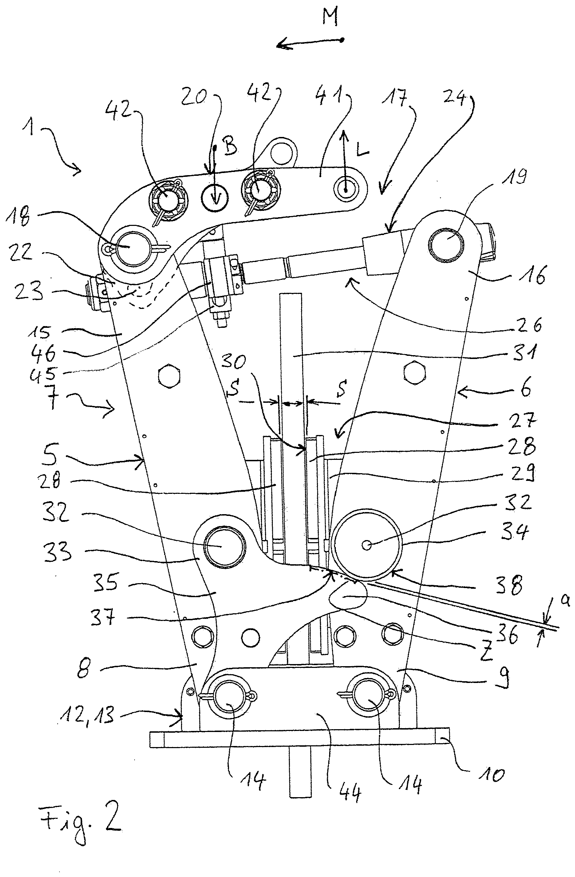

Diesen Effekt verhindern die aneinander angreifenden Wirkflächen mit ihren Steuerkurvenkonturen 37 und 38 der beiden Anschlagelemente 33 und 34 (siehe Fig. 1, 2 und 3). Dabei ist die Steuerkurvenkontur 37 so ausgebildet, dass sie bei einer gleichsinnigen Stellwirkung in Richtung M auf die erste und zweite Bremshebelanordnung 5 und 6 die Steuerkurvenkontur 38 vom zweiten Anschlagelement 34 (hier eine Zylinderfläche) unterstellt und damit verhindert, dass sich die erste Bremshebelanordnung 5 weiter in Richtung M bewegen kann. Durch die gleichzeitige Kopplung der zweiten Bremshebelanordnung 6 über die Stellstange 24 wird damit auch eine weitere Bewegung der zweiten Bremshebelanordnung 6 bzw. des daran aufgehängten Bremselements 27 in Richtung Bremsscheibe verhindert. Beide Bremshebelanordnungen 5 und 6 verbleiben also in einer zentrierten Stellung (Zentrierstellung) bezüglich der Bremsscheibe 31 (Fig. 2). Der Lüftspalt S bleibt auf beiden Seiten zwischen der Bremsscheibe 31 und den Bremsbelägen 28 bzw. deren Bremsflächen 30 bestehen.

Die Steuerkurvenkontur 37 ist dabei so ausgebildet, dass sie bei der zangenförmigen Bremsbewegung der beiden Bremshebelanordnungen 5 und 6 aufeinander zu beim Schließen der Bremse nicht behindert, sondern die Wirkflächen mit ihren Steuerkurvenkonturen 38 und 37 aneinander entlang gleiten oder in dem Fall, dass das zweite Anschlagelement 34 als drehbare Scheibe ausgebildet ist aneinander abrollen.

In einer optionalen Ausführung ist ein auf den Lüftspalt S abgestimmtes Spiel a zwischen den Steuerkurvenkonturen 37, 38 vorgesehen. Das Spiel a ist dabei so bestimmt, dass in der Zentrierstellung die Steuerkurvenkonturen 38, 37 zwar aneinander liegen aber einseitig ein verringerter Lüftspalt S bestehen bleibt, ohne dass einer der Bremsbeläge 28 mit seiner Bremsfläche 30 an der Bremsscheibe 31 anliegt.

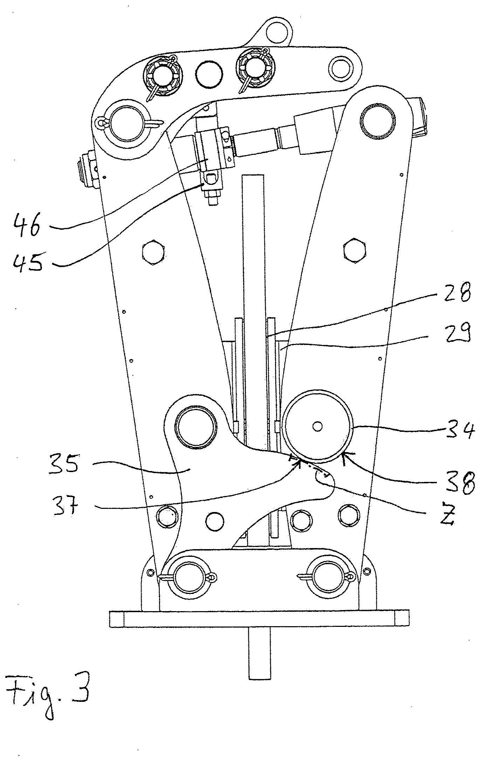

Bei längerem Betrieb der Bremse nutzen sowohl die Bremsbeläge 28 als auch die Bremsscheibe 31 ab, sie werden dünner (Fig. 3). Um eine möglichst gleichbleibende Bremscharakteristik zu erhalten, wird diese Abnutzung durch Verstellen der Gewindespindelanordnung 26 ausgeglichen, indem die Stellstange 24 in die Gewindehülse 26A hineingedreht wird. Dies kann entweder regelmäßig manuell erfolgen oder über einen Nachstellmechanismus, der über eine Steuerkulisse 45 an einem mit der Stellstange 24 gekoppelten Freilauf 46 angreift und über diesen bei zunehmender Abnutzung der Bremsbeläge 28 bzw. der Bremsscheibe 31 die Stellstange 24 verdreht, sodass die Wirklänge zwischen dem Anlenkpunkt 23 und dem Gelenkbolzen 19 entsprechend verkürzt wird. Dadurch bleibt der eigentliche Bremsweg, der überwunden werden muss, um den Lüftspalt s zwischen Bremsbelägen 29 und Bremsscheibe 31 zu überbrücken, weitgehend konstant.

Die Steuerkurvenkonturen 37 und 38 sind so aufeinander abgestimmt, dass sie diesen Stellungsausgleich nicht behindern. Bei einer zylindrischen oder kreisförmigen Steuerkurvenkontur 38 gelingt dies über eine z. B evolventenförmig gekrümmte Steuerkurvenkontur 37, entlang der ein Zentrierstellungsbereich Z (strichpunktierte Zone) verläuft. Der Radius der kreisförmigen Steuerkurvenkontur 38 zum Krümmungsradiusverlauf der Steuerkurvenkontur 37 steht dabei in einem Verhältnis von etwa eins zu zwei.

Die Anschlagelemente 33 und 34 sind als flache Steuerscheibe bzw. Anschlagrolle ausgebildet, die an vorhandenen Industriebremsen durch Nutzung bereits vorhandener Elemente, wie Tragbolzen 32 und Bolzen 14, ohne großen Aufwand nachgerüstet werden können.

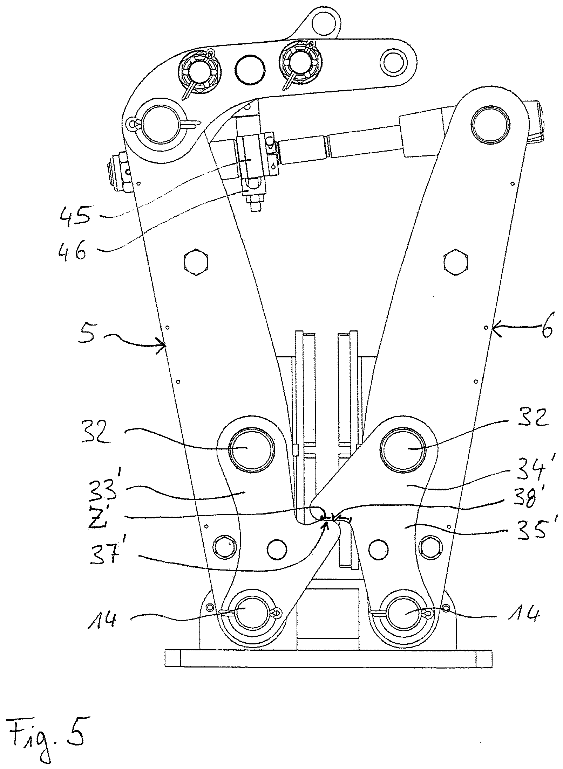

Fig. 5 zeigt ein Ausführungsbeispiel mit alternativen Anschlagelementen 33' und 34', wobei das erste Anschlagelement 33' hakenförmig ausgebildet ist und das zweite Anschlagelement 34' ebenfalls über einen Halteschenkel 35' an zwei Punkten drehfest mit der zweiten Bremshebelanordnung 6 gekoppelt ist und einen nasenförmigen Steuerschenkel 36' aufweist, der eine Steuerkurvenkontur 38' aufweist, die mit der Steuerkurvenkontur 37' in Eingriff steht. Bei dieser Ausführung ist die Steuerkurvenkontur 37' stärker gekrümmt als die Steuerkurvenkontur 38'. Das Verhältnis der Krümmungsradien der Steuerkurvenkontur 37' und der Steuerkurventkontur 38'beträgt etwa 1 : 1 bis 1: 3. Der Zentrierstellungsbereich Z verläuft entlang der Steurkurvenkontur 38' an der Unterseite der Nase. Optional ist auch hier ein Spiel a vorgesehen. Bei dieser Ausführung sind die auf die jeweiligen Bremshebelanordnungen 5 und 6 übertragenen Zentrierkräfte etwa symmetrisch und auf insgesamt vier Anlenkpunkte an den Bolzen 14 und 32 verteilt, sodass die Belastungen an diesen Punkten reduziert werden können und die Bremshebelanordnungen 5, 6 weitgehend symmetrisch beansprucht werden.

In einem weiteren Ausführungsbeispiel sind an jeder Bremshebelanordnung 5, 6 entsprechende Anschlagelemente 33 und 34 vorgesehen, und zwar kreuzweise gegenüberliegend, sodass an der ersten Bremshebelanordnung 5 ein erstes Anschlagelement 33 und ein zweites Anschlagelement 34 angeordnet ist und an der zweiten Bremshebelanordnung 6 jeweils entsprechend gegenüberliegend ein zweites Anschlagelement 34 und ein erstes Anschlagelement 33, die jeweils mit denen an der ersten Bremshebelanordnung 5 in der bekannten Weise in Eingriff stehen. Bei so einer Anordnung ist die Zentrierung der gesamten Bremszangenanordnung 7 in beide Richtungen sichergestellt. Eine solche Industriebremse kann in beliebigen Lagen, also auch mit einer waagerecht verlaufenden Bremsscheibe eingesetzt werden, ohne dass innere Kräfte, die über das Lüftgerät 4 bzw. die Bremsfederanordnung 3 ausgeübt werden, und äußere Kräfte (Schwerkraftkräfte), die auf die Bremshebelanordnung 5 und 6 wirken, die Bremshebelanordnungen 5 und 6 insgesamt verkippen. Weitere Ausführungen und Varianten der Erfindung ergeben sich im Rahmen der Ansprüche.

### Bezugszeichenliste

- 1: Industriebremse
- 2: Anschlaganordnung
- 3: Bremsfeder
- 4: Lüftgerät
- 5: erste Bremshebelanordnung
- 6: zweite Bremshebelanordnung
- 7: Bremszangenanordnung
- 8: erstes (unteres) Ende
- 9: erstes (unteres) Ende
- 10: Grundplatte (Träger)
- 12: Sockel
- 13: Sockel
- 14: Bolzen
- 15: zweites (oberes) Ende
- 16: zweites (oberes) Ende
- 17: Stellanordnung
- 18: Gelenkbolzen
- 19: Gelenkbolzen
- 20: Winkelhebelanordnung
- 21: Steuerschenkel
- 22: Stellschenkel
- 23: Anlenkpunkt
- 24: Stellstange
- 25: Achse
- 26: Gewindespindelanordnung
- 27: Bremselement
- 28: Bremsbelag
- 29: Bremsbelagträger
- 30: Bremsfläche
- 31: Brems scheibe
- 32: Tragbolzen
- 33: erstes Anschlagelement
- 34: zweites Anschlagelement
- 35: Halteschenkel
- 36: Steuerschenkel
- 37: Steuerkurvenkontur
- 38: Steuerkurvenkontur
- 39: Spindel
- 40: Kreuzstück
- B: Schließkraft
- L: Lüftkraft
- M: Moment/Kipprichtung
- 41: Steuerhebel
- 42: Querbolzen
- 43: Ende
- 44: Zusatzsockel
- 45: Steuerkulisse
- 46: Freilauf

## Patentansprüche

1. Anschlaganordnung mit einer ersten und zweiten Bremshebelanordnung (5, 6), die gemeinsam ein Bremshebelpaar einer Bremszangenanordnung (7) bilden, und jeweils an ihrem ersten Ende (8, 9) an einem Träger (10) angelenkt sind, an ihrem zweiten Ende (15, 16) über eine Stellanordnung (17) miteinander gekoppelt sind, **dadurch gekennzeichnet, dass** jeweils zwischen dem ersten und zweiten Ende (8, 15) der ersten Bremshebelanordnung (5) ein erstes Anschlagelement (33, 33') angeordnet ist und zwischen dem ersten und zweiten Ende (9 , 16) der zweiten Bremshebelanordnung (6) ein zweites Anschlagelement (34; 34') angeordnet ist, und das erste und zweite Anschlagelement (33; 33', 34; 34') mit derart ausgebildeten Wirkflächen aneinander angreifen, dass sie gegenläufige Betriebsbewegungen zwischen einer Brems- und einer Lüftstellung der Bremshebelanordnungen (5, 6) zueinander und auseinander zulassen und eine gleichgerichtete Kippbewegung der Bremshebelanordnungen (5, 6) in eine Kipprichtung (M) hemmen, so dass die Bremshebelanordnungen (5, 6) in der Lüftstellung gegen eine Kippwirkung in einer Zentrierstellung innerhalb eines definierten Zentrierstellungsbereichs zu einem Bremselement (27) gehalten wird.

2. Anschlaganordnung nach Anspruch 1, bei welcher der Zentrierstellungsbereich eine erste Grenzstellung und eine zweite, verschleißabhängige Grenzstellung umfasst, welche die Bremshebelanordnungen in der Lüftstellung einnehmen, wobei die Bremshebelanordnungen (5, 6) in der ersten Grenzstellung weiter geöffnet sind als in der zweiten Grenzstellung.

3. Anschlaganordnung nach Anspruch 1 oder 2, bei welcher die Wirkflächen am ersten und zweiten Anschlagelement (33; 33', 34; 34') jeweils eine Steuerkurvenkontur (37; 37', 38; 38') aufweisen, die in einer Zentrierstellung im Zentrierstellungsbereich aneinander liegen.

4. Anschlaganordnung nach Anspruch 1, 2 oder 3, bei welchem das erste Anschlagelement (37) als Steuernocke und das zweite Anschlagelement (38) als Anschlagrolle ausgebildet ist.

5. Anschlaganordnung nach Anspruch 4, bei welcher die Steuernocke einen Halteschenkel (35) aufweist, der in einem ersten Anlenkpunkt (14) und in einem Aufnahmepunkt (32) eines Bremsbelagträgers (29) zwischen dem ersten und zweiten Ende (5; 6, 8; 9) der Bremshebelanordnung (5; 6) fixiert ist.

6. Anschlaganordnung nach Anspruch 4 oder 5, bei welcher die Anschlagrolle (8) in einem Aufnahmepunkt eines Bremsbelagträgers (29) an der Bremshebelanordnung (5; 6) fixiert ist.

7. Anschlaganordnung nach Anspruch 3, 4, 5 oder 6 bei welchem die Steuerkurvenkontur (37, 37') des ersten Anschlagelements (33, 33') einen ersten Krümmungsverlauf und die Steuerkurvenkontur (38, 38') des zweiten Anschlagelements (34, 34') einen zweiten Krümmungsverlauf aufweist, wobei die Krümmungsradien im ersten und zweiten Krümmungsverlauf ein Krümmungsverhältnis zwischen drei zu eins und eins zu eins, insbesondere von zwei zu eins aufweisen.

8. Anschlaganordnung nach einem der vorhergehenden Ansprüche, wobei jeweils an der ersten und zweiten Bremshebelanordnung (5, 6) ein erstes und zweites Anschlagelement (33,34; 33', 34) angeordnet sind, sodass sie das gleichgerichtete Verkippen der Bremshebelanordnungen (5, 6) in beide Kipprichtungen hemmen.

9. Anschlaganordnung nach einem der vorhergehenden Ansprüche, bei welchem wenigstens eines der Anschlagelemente (33,34; 33', 34) aus einem härtbaren Werkstoff hergestellt ist und im Bereich der Steuerkurvenkontur (37;37', 38; 38') gehärtet und/oder beschichtet sind.

10. Bremseinrichtung (1) mit einer Anschlaganordnung nach einem der Ansprüche 1 bis 9

## Claims

1. A stop arrangement having a first and second brake lever arrangement (5, 6) which together form a brake lever pair of a brake caliper arrangement (7) and which are respectively articulated at the first end (8, 9) thereof on a support (10) and, at the second end (15, 16) thereof, are coupled to one another by means of a positioning arrangement (17), **characterized in that** a first stop element (33, 33') is disposed between the first and second end (8, 15) of the first brake lever arrangement (5) and a second stop element (34; 34') is disposed between the first and second end (9, 16) of the second brake lever arrangement (6), and the first and second stop element (33; 33', 34; 34') engage with one another by means of effective areas designed in such a way that they allow operating movements in opposite directions towards and away from one another between a braking position and a ventilating position of the brake lever arrangements (5, 6) and inhibit an aligned tilting movement of the brake lever arrangements (5, 6) in a tilting direction (M), such that, in the ventilating position, the brake lever arrangements (5, 6) are retained against a tilting action in a centering position within a defined centering position range with respect to a brake element (27).

2. The stop arrangement according to claim 1, wherein the centering position range comprises a first limit position and a second, wear-dependent limit position, which the brake lever arrangements adopt in the ventilating position, wherein in the first limit position the brake lever arrangements (5, 6) are open wider than in the second limit position.

3. The stop arrangement according to claim 1 or 2, wherein each active area at the first and second stop element (33; 33', 34; 34') has a control cam contour (37; 37', 38; 38') which abut against each other in a centering position within the centering position range.

4. The stop arrangement according to claim 1, 2 or 3, wherein the first stop element (37) is designed as a control cam and the second stop element (38) is designed as a stop roller.

5. The stop arrangement according to claim 4, wherein the control cam has a retaining leg (35) which is fastened in a first articulation point (14) and in a support point (32) of a brake pad support (29) between the first and second ends (5; 6, 8; 9) of the brake lever arrangement (5; 6).

6. The stop arrangement according to claim 4 or 5, wherein the stop roller (8) is fastened in a support point of a brake pad support (29) to the brake lever arrangement (5; 6).

7. The stop arrangement according to claim 3, 4, 5 or 6, wherein the control cam contour (37, 37') of the first stop element (33, 33') has a first curvature progression and the control cam contour (38, 38') of the second stop element (34, 34') has a second curvature progression, wherein the curvature radii in the first and second curvature progression have a curvature ratio between three to one and one to one, in particular of two to one.

8. The stop arrangement according to any of the preceding claims, wherein a first and second stop element (33, 34; 33', 34') are respectively arranged on the first and second brake lever arrangement (5, 6) so as to inhibit the aligned tilting of the brake lever arrangements (5, 6) in both tiling directions.

9. The stop arrangement according to any of the preceding claims, wherein at least one of the stop elements (33, 34; 33', 34') is made of a curable material and is cured and/or coated in the region of the control cam contour (37; 37', 38; 38').

10. A braking device (1) having a stop arrangement according to any of claims 1 to 9.

## Revendications

1. Agencement de butée avec un premier et second agencement de levier de frein (5, 6) qui forment ensemble une paire de leviers de frein d'un agencement d'étrier de frein (7) et sont chacun articulés à leur première extrémité (8, 9) à un support (10), sont couplés l'un à l'autre à leur seconde extrémité (15, 16) par le biais d'un agencement de réglage (17), **caractérisé en ce qu'**un premier élément de butée (33, 33') est à chaque fois disposé entre la première et seconde extrémité (8, 15) du premier agencement de levier de frein (5) et un second élément de butée (34 ; 34') est disposé entre la première et seconde extrémité (9, 16) du second agencement de levier de frein (6), et les premier et second éléments de butée (33 ; 33', 34 ; 34') sont appliqués l'un sur l'autre avec des surfaces actives réalisées de telle sorte qu'elles autorisent des mouvements de fonctionnement opposés entre une position de freinage et une position de relevage des agencements de levier de frein (5, 6) l'un vers l'autre et l'un à l'écart de l'autre, et bloquent un mouvement de basculement dans le même sens des agencements de levier de frein (5, 6) dans un sens de basculement (M) de sorte que les agencements de levier de frein (5, 6) sont maintenus dans la position de relevage à l'encontre d'une action de basculement dans une position de centrage au sein d'une région de position de centrage définie par rapport à un élément de frein (27).

2. Agencement de butée selon la revendication 1, dans lequel la région de position de centrage comprend une première position limite et une seconde position limite, dépendant de l'usure, qu'adoptent les agencements de levier de frein dans la position de relevage, dans lequel les agencements de levier de frein (5, 6) sont davantage ouverts dans la première position limite que dans la seconde position limite.

3. Agencement de butée selon la revendication 1 ou 2, dans lequel les surfaces actives présentent sur le premier et second élément de butée (33 ; 33', 34 ; 34') à chaque fois un contour de came de commande (37 ; 37', 38 ; 38') qui se situent l'un contre l'autre dans une position de centrage dans la région de position de centrage.

4. Agencement de butée selon la revendication 1, 2 ou 3, dans lequel le premier élément de butée (37) est réalisé en tant que came de commande et le second élément de butée (38) en tant que rouleau de butée.

5. Agencement de butée selon la revendication 4, dans lequel la came de commande présente une branche de maintien (35) qui est fixée dans un premier point d'articulation (14) et dans un point de réception (32) d'un support de garniture de frein (29) entre la première et seconde extrémité (5 ; 6, 8 ; 9) de l'agencement de levier de frein (5 ; 6).

6. Agencement de butée selon la revendication 4 ou 5, dans lequel le rouleau de butée (8) est fixé à l'agencement de levier de frein (5 ; 6) dans un point de réception d'un support de garniture de frein (29).

7. Agencement de butée selon la revendication 3, 4, 5 ou 6, dans lequel le contour de came de commande (37, 37') du premier élément de butée (33, 33') présente une première allure de courbure et le contour de came de commande (38, 38') du second élément de butée (34, 34') présente une seconde allure de courbure, dans lequel les rayons de courbure dans la première et seconde allure de courbure présentent un rapport de courbure entre trois sur un et un sur un, notamment de deux sur un.

8. Agencement de butée selon une des revendications précédentes, dans lequel un premier et second élément de butée (33, 34 ; 33', 34) sont à chaque fois disposés sur le premier et second agencement de levier de frein (5, 6) de sorte qu'ils bloquent le basculement dans le même sens des agencements de levier de frein (5, 6).

9. Agencement de butée selon une des revendications précédentes, dans lequel au moins un des éléments de butée (33, 34 ; 33', 34) est fabriqué en un matériau durcissable et sont durcis et/ou enduits dans la région du contour de came de commande (37 ; 37' , 38 ; 38').

10. Dispositif de frein (1) avec un agencement de butée selon une des revendications 1 à 9.
